# FASCICULE DE BREVET EUROPEEN

(11) **EP 1 705 340 B1**
(45) Date de publication et mention de la délivrance du brevet: **25.12.2013**
(21) Numéro de dépôt: 06290363.8
(22) Date de dépôt: 02.03.2006
(51) Int. Cl.: F01D 5/08, F01D 9/04, F01D 9/06, F01D 11/00

(54) **Dispositif de liaison entre une enceinte de passage d'air de refroidissement et un aubage de distributeur dans une turbomachine**
Verbindungsstück zwischen einem Kühlluftplenum und einer Statorschaufel in einer Turbomaschine
Connector between a cooling air plenum and a stator vane in a turbomachine

(30) Priorité: 23.03.2005 FR 0502880
(43) Date de publication de la demande: 27.09.2006
(73) Titulaire: SNECMA, 75015 Paris (FR)
(72) Inventeur: Dervaux, Alexandre, 75014 Paris (FR); Bermond, Sabine, 75003 Paris (FR)
(74) Mandataire: Ramey, Daniel

(56) Documents cités:
- EP-A- 0 919 774
- EP-A- 1 164 250
- FR-A- 2 027 667
- GB-A- 790 248
- US-A- 3 721 089

## Description

La présente invention concerne un dispositif de liaison entre une enceinte de passage d'air de refroidissement, telle qu'une source d'air de refroidissement ou une enceinte de tranquillisation, et un aubage de distributeur dans une turbomachine, telle qu'un turboréacteur ou un turbopropulseur d'avion.

Les documents EP-A-1 164 250, FR-A-2 027 667 et EP-A-0 919 774 décrivent des dispositifs de liaison de turbines à gaz.

Dans une turbomachine, les aubages de distributeur qui sont exposés à des températures importantes, notamment en aval de la chambre de combustion, comprennent des cavités internes de circulation d'air de refroidissement provenant d'une enceinte radialement externe, cet air pouvant être en partie diffusé dans la veine d'écoulement de gaz par des perçages formés sur les aubages, et en partie évacué dans une enceinte radialement interne.

Des moyens de liaison sont prévus entre ces enceintes et les aubages de distributeur pour permettre le passage de l'air de refroidissement avec un minimum de pertes et de fuites au niveau des interfaces, et comprennent des tubes métalliques dont les extrémités sont montées à étanchéité dans des orifices d'un carter et dans des orifices des aubages de distributeur.

En fonctionnement de la turbomachine, le carter et surtout les aubages de distributeur se dilatent thermiquement et sont soumis à des vibrations importantes, ce qui engendre des déplacements relatifs et des désalignements entre les orifices du carter et ceux des aubages.

Pour compenser ces déplacements relatifs et ces désalignements, on utilise des tubes de liaison dont les extrémités sont évasées de façon à permettre un léger rotulage des extrémités des tubes dans les orifices du carter et des aubages, ces extrémités étant montées serrées dans ces orifices pour garantir une étanchéité suffisante de l'ensemble.

Cette solution n'est toutefois pas satisfaisante dans la mesure où le montage serré des extrémités des tubes limite leurs possibilités de rotulage et occasionne des zones d'usure importante par frottement sur les surfaces internes des orifices du carter et des aubages, qui peuvent entraîner des fuites au niveau de ces extrémités voire même la perte ou la ruine des tubes de liaison.

Une solution à ce problème consiste dans le document EP-A2-1 164 250 à associer une bague à chaque tube de liaison qui est montée entre une des extrémités du tube et un aubage et qui comporte une collerette externe déplaçable par glissement entre une surface de l'aubage et une surface d'un élément annulaire rapporté et fixé sur l'aubage.

Cependant, cette solution n'est pas satisfaisante car elle ne permet pas de compenser efficacement les déplacements relatifs en rotation entre le carter et l'aubage sans provoquer une usure importante du tube de liaison.

L'invention a notamment pour but d'apporter une solution simple, économique et efficace à ce problème.

Elle propose à cet effet un dispositif de liaison selon la revendication 1 entre une enceinte de passage d'air de refroidissement et un aubage de distributeur dans une turbomachine telle qu'un turboréacteur d'avion, ce dispositif comprenant des tubes métalliques dont les extrémités sont montées coulissantes à étanchéité dans des orifices d'un carter de l'enceinte et de l'aubage de distributeur, une extrémité de chaque tube étant engagée dans une bague comprenant une collerette externe radiale déplaçable par glissement entre deux surfaces de guidage perpendiculaires à l'axe des orifices et portées par ledit aubage, caractérisé en ce que la surface de guidage située du côté du carter est fixée sur l'aubage et l'autre surface de guidage est axialement mobile par rapport à l'aubage et associée à un moyen de rappel la sollicitant en direction du carter.

Le dispositif selon l'invention permet d'absorber les décalages et les désalignements entre les orifices du carter et de l'aubage résultant du fonctionnement de la turbomachine, tout en assurant la continuité de la liaison de fluide entre l'enceinte précitée et l'aubage de distributeur et en évitant l'usure des extrémités des tubes et une mise en contrainte de ces tubes.

Au niveau de chaque tube, les déplacements relatifs en translation et en rotation entre le carter d'une enceinte et l'aubage sont compensés par glissement de la collerette de la bague entre les surfaces de guidage de l'aubage et par compression élastique du moyen de rappel. Le moyen de rappel est par exemple un ressort à spires ou une rondelle Belleville.

Les tubes ne sont donc pas mis à contribution pour compenser les déplacements relatifs entre le carter et l'aubage, ce qui permet de limiter leur usure par frottement et d'augmenter leur durée de vie.

Avantageusement, l'extrémité du tube montée dans la bague comporte une surface en segment de sphère qui est rotulante et coulissante dans la bague. L'autre extrémité du tube peut également comporter une surface en segment de sphère qui est coulissante et rotulante dans un orifice du carter de l'enceinte.

Les bagues du dispositif selon l'invention peuvent avantageusement être associées à des tubes de la technique antérieure à extrémités évasées, ce qui est très économique.

L'invention concerne également un turbomachine, telle qu'un turboréacteur ou un turbopropulseur d'avion, caractérisée en ce qu'elle comprend au moins un dispositif tel que décrit ci-dessus.

L'invention sera mieux comprise et d'autres caractéristiques et avantages de l'invention apparaîtront à la lecture de la description suivante faite à titre d'exemple non limitatif en référence aux dessins annexés dans lesquels :
- la figure 1 est une demi-vue schématique partielle en coupe axiale d'un aubage de distributeur relié à deux enceintes de passage d'air de refroidissement par des dispositifs de liaison selon la technique antérieure ;
- les figures 2 et 3 sont des vues schématiques partielles en coupe axiale d'un dispositif de liaison selon la technique antérieure ;
- les figures 4 à 8 sont des vues schématiques partielles en coupe axiale du dispositif de liaison selon l'invention.

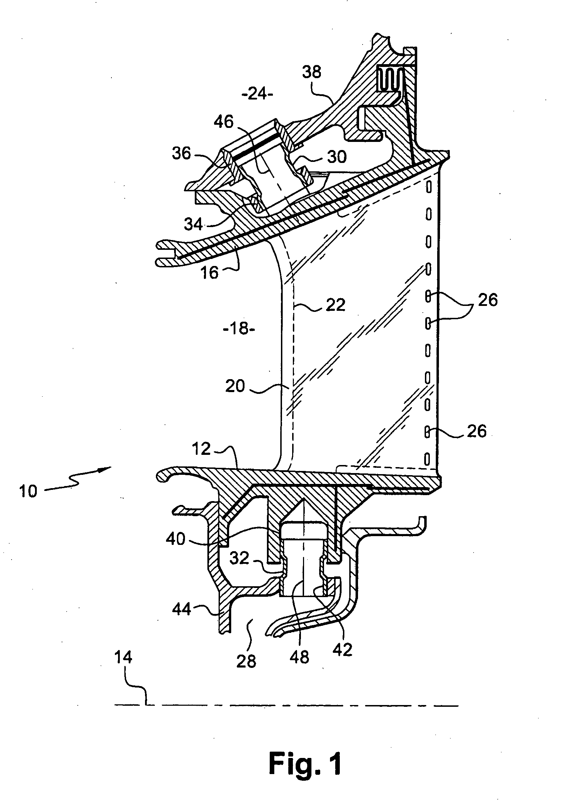

La figure 1 est une demi-vue schématique partielle en coupe axiale d'un aubage de distributeur 10 dans une turbomachine, à paroi annulaire radialement interne 12 d'axe 14 et à paroi tronconique radialement externe 16 d'axe 14, inclinée en amont vers l'axe 14, délimitant entre elles un espace annulaire 18 d'écoulement des gaz provenant d'une chambre de combustion (non représentée) de la turbomachine, et entre lesquelles s'étendent radialement des pales 20.

Chaque pale 20 comprend une cavité interne 22 de circulation d'air de refroidissement provenant d'une enceinte d'alimentation 24, radialement externe à la paroi 16 de l'aubage, l'air étant en partie diffusé dans l'espace annulaire 18 par des fentes 26 des pales 20 et en partie évacué dans une enceinte 28 radialement interne à la paroi 12 de l'aubage.

Les cavités 22 des pales sont reliées aux enceintes externe 24 et interne 28 au moyen de dispositifs de liaison comprenant des tubes métalliques 30, 32, respectivement.

Les tubes 30 de passage d'air entre l'enceinte externe 24 et les cavités 22 des pales, ont leurs extrémités engagées à étanchéité dans des douilles 34, 36 fixées dans des orifices formés dans la paroi 16 de l'aubage et dans des orifices formés dans un carter 38 de l'enceinte 24, respectivement.

Les tubes 32 de passage d'air entre les cavités 22 des pales et l'enceinte interne 28, ont leurs extrémités engagées à étanchéité dans des orifices 40, 42 de la paroi 12 de l'aubage et d'un rebord annulaire d'un carter 44 de l'enceinte 28, respectivement.

En fonctionnement de la turbomachine, la dilatation thermique de l'aubage de distributeur 10 et la vibration du moteur de la turbomachine provoquent, au niveau de chaque tube 30,32, des déplacements relatifs en translation et en rotation entre l'aubage 10 et les carters des enceintes 24, 28.

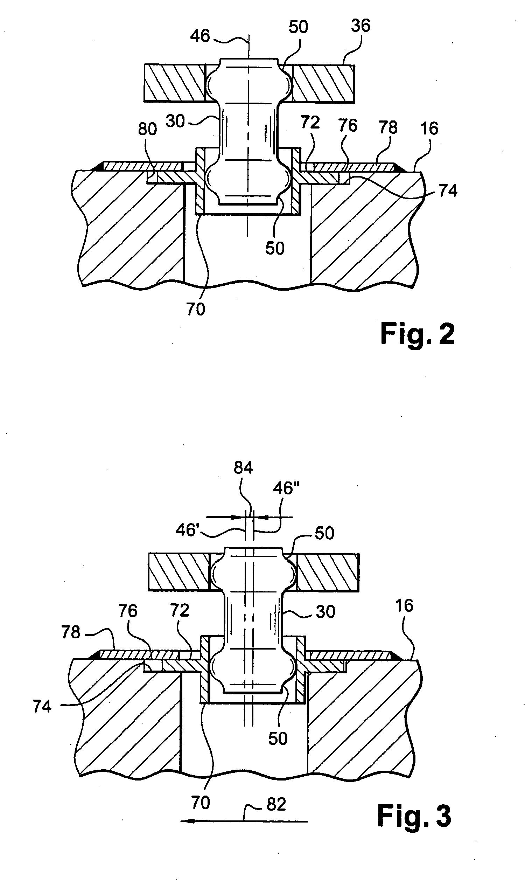

Les figures 2 et 3 sont des vues schématiques partielles en coupe axiale d'un dispositif selon la technique actuelle, dans lequel un tube 30 est engagé par une de ses extrémités 50 dans une bague cylindrique 70 comprenant sur sa surface externe une collerette radiale 72 déplaçable par glissement entre une première surface de guidage 74 perpendiculaire à l'axe 46 de l'orifice de l'aubage et de la douille fixe 36, et formée dans la paroi 16 de l'aubage et une seconde surface de guidage 76 parallèle à la surface 74 et formée par une rondelle 78 coaxiale à l'orifice de la paroi 16 de l'aubage et fixée sur la paroi 16.

Le diamètre externe de la bague 70 est inférieur au diamètre interne de la rondelle 78 et de l'orifice de l'aubage, et le diamètre externe de la collerette 72 est inférieur au diamètre interne d'un chambrage 80 de l'aubage qui reçoit la collerette 72, ce qui permet le glissement de la collerette 72 entre les surfaces de guidage 74, 76 et le déplacement de la bague 70 dans un plan perpendiculaire à l'axe 46.

Au niveau de chaque tube, les déplacements relatifs en translation entre le carter de l'enceinte et l'aubage sont compensés par coulissement des extrémités du tube 30 dans la douille fixe 36 et dans la bague 70, et par glissement de la collerette 72 de la bague entre les surfaces de guidage 74, 76 de l'aubage.

Cependant, les déplacements relatifs en rotation entre le carter de l'enceinte et l'aubage sont compensés par rotulage des extrémités du tube 30 dans la douille fixe 36 et dans la bague 70, ce qui provoque une usure importante des extrémités du tube.

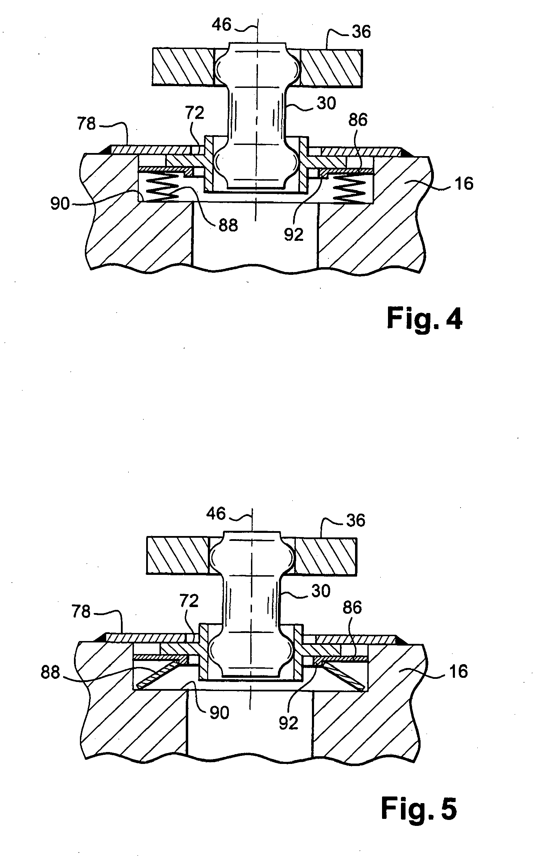

Les figures 4 à 8 sont des vues schématiques partielles en coupe axiale d'un dispositif selon l'invention, dans lequel une rondelle annulaire 86 coaxiale à l'orifice de la paroi 16 de l'aubage est montée axialement mobile dans celui-ci et est sollicitée par un ressort de rappel 88 monté entre la surface annulaire radialement interne de la rondelle 86 et le fond 90 d'un chambrage de l'aubage, ce ressort 88 sollicitant la rondelle 86 en direction de la douille fixe 36 du carter de l'enceinte pour le serrage de la collerette radiale 72 entre cette rondelle 86 et la rondelle fixe 78.

Le ressort de rappel 88 est formé, en figure 4, par un ressort à spires, et en figure 5, par une rondelle Belleville, la rondelle 86 comportant sur son bord interne un rebord cylindrique radialement interne 92 permettant de centrer et guider le ressort de rappel 88 lors de sa compression.

Le diamètre interne de la rondelle 86 est sensiblement égal à celui de l'orifice de l'aubage et à celui de la rondelle 78.

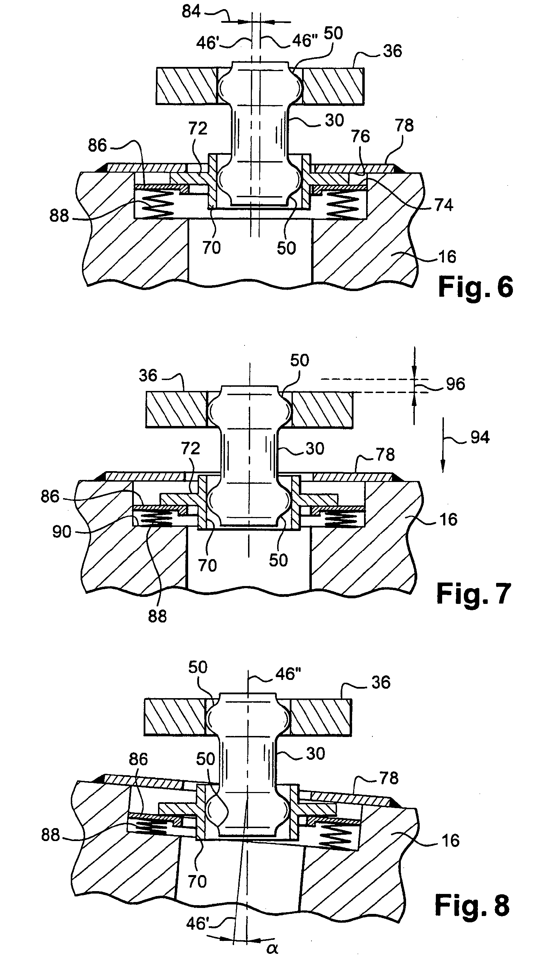

Au niveau de chaque tube, les déplacements relatifs entre le carter de l'enceinte et l'aubage sont compensés par glissement de la collerette 72 de la bague entre les surfaces de guidage 74, 76 de l'aubage comme représenté en figure 6 et/ou par compression du ressort de rappel 88 comme représenté aux figures 7 et 8.

En figure 7, le carter de l'enceinte s'est déplacé selon la flèche 94 en direction de l'aubage, d'une distance 96 compensée par déplacement de la rondelle 86 vers l'aubage et compression du ressort 88 entre la rondelle 86 et le fond 90 de l'aubage.

En figure 8, l'axe 46' de l'orifice de l'aubage est décalé d'un angle α par rapport à l'axe 46" de la douille fixe 36 et ce décalage angulaire est compensé par un déplacement de la rondelle 86 vers l'aubage et une compression du ressort de rappel 88, la bague 70 restant alignée sur l'axe 46" de la douille 36 et sa collerette 72 s'étendant en oblique entre les rondelles 78 et 86.

En variante, les bagues 70 peuvent être montées sur les extrémités des tubes engagées dans les douilles fixes 36 du carter.

Le dispositif selon l'invention peut également être monté entre l'aubage 10 et le carter 44 de l'enceinte interne 28.

De façon générale, le dispositif selon l'invention permet d'absorber les déplacements relatifs entre le carter de l'enceinte et l'aubage de distributeur sans qu'il y ait de glissement ou de rotation des extrémités évasées ou sphériques 50 des tubes 30 dans la douille 36 et dans la bague 70 tant que ces déplacements relatifs restent inférieurs aux courses de déplacement de la collerette 72 et/ou aux courses de compression des ressorts 88. On évite ainsi toute usure des extrémités 50 des tubes 30 et ce n'est que lorsque les déplacements relatifs entre le carter de l'enceinte et l'aubage sont supérieurs aux courses précitées de déplacement de la collerette et/ou de compression du ressort de rappel, que des rotations et/ou glissements des extrémités 50 des tubes sont susceptibles de se produire.

Le dispositif selon l'invention est donc capable d'absorber des déplacements relativement importants entre le carter de l'enceinte et l'aubage, tout en assurant la continuité des liaisons de fluide entre le carter et l'aubage et en réduisant à un minimum les risques d'usure des tubes de liaison et les contraintes qui leur sont appliquées.

## Revendications

1. Dispositif de liaison dans une turbomachine, comprenant une enceinte (24, 28) de passage d'air de refroidissement, un aubage de distributeur (10) ,et de s tubes métalliques (30) dont les extrémités sont montées coulissantes à étanchéité dans des orifices d'un carter (38, 44) de l'enceinte et de l'aubage de distributeur (10), une extrémité de chaque tube (30) étant engagée dans une bague (70) comprenant une collerette externe radiale (72) déplaçable par glissement entre deux surfaces de guidage (74, 76) perpendiculaires à l'axe (46) des orifices et portées par ledit aubage (10), la surface de guidage (76) située du côté du carter (38, 44) étant fixée sur l'aubage (10), **caractérisé en ce que** l'autre surface de guidage (74) est axialement mobile par rapport à l'aubage (10) et associée à un moyen de rappel (88) la sollicitant en direction du carter (38, 44).

2. Dispositif selon la revendication 1, **caractérisé en ce que** le moyen de rappel (88) est un ressort à spires ou une rondelle Belleville.

3. Dispositif selon la revendication 1 ou 2, **caractérisé en ce que** l'extrémité (50) du tube (30) montée dans la bague (70) comporte une surface en segment de sphère qui est rotulante et coulissante dans la bague.

4. Dispositif selon l'une des revendications 1 à 3, **caractérisé en ce que** l'autre extrémité (50) du tube (30) comporte une surface en segment de sphère qui est coulissante et rotulante dans un orifice du carter (38, 44) de l'enceinte.

5. Turbomachine, telle qu'un turboréacteur ou un turbopropulseur d'avion, **caractérisée en ce qu'**elle comprend au moins un dispositif selon l'une des revendications 1 à 4.

## Patentansprüche

1. Verbindungsvorrichtung in einer Turbomaschine bzw. einem Turbotriebwerk, enthaltend einen Raum (24, 28) zum Durchtritt von Kühlluft, eine Leitschaufelanordnung (10) und Metallrohre (30), deren Enden in Öffnungen eines Gehäuses (38, 44) des Raums und der Leitschaufelanordnung (10) in dichter Weise gleitbeweglich gelagert sind, wobei ein Ende eines jedes Rohres (30) in einen Ring (70) eingreift, der einen radial äußeren Kragen (72) aufweist und zwischen zwei Führungsflächen (74, 76) gleitbeweglich verlagert werden kann, die senkrecht zur Achse (46) der Öffnungen verlaufen und von der Schaufelanordnung (10) getragen werden, wobei die auf der Seite des Gehäuses (38, 44) liegende Führungsfläche (76) an die Schaufelanordnung (10) befestigt ist, **dadurch gekennzeichnet, dass** die andere Führungsfläche (74) gegenüber der Schaufelanordnung (10) axial beweglich ist und ihr ein Rückstellmittel (88) zugeordnet ist, das sie in Richtung des Gehäuses (3 8, 44) beaufschlagt.

2. Vorrichtung nach Anspruch 1, **dadurch gekennzeichnet, dass** das Rückstellmittel (88) eine Schraubenfeder oder eine Tellerfeder ist.

3. Vorrichtung nach Anspruch 1 oder 2, **dadurch gekennzeichnet, dass** das im Ring (70) gelagerte Ende (50) des Rohres (30) eine Kugelsegmentfläche aufweist, die im Ring verdrehbar und gleitbeweglich ist.

4. Vorrichtung nach einem der Ansprüche 1 bis 3, **dadurch gekennzeichnet, dass** das andre Ende (50) des Rohres (30) eine Kugelsegmentfläche aufweist, die in einer Öffnung des Gehäuses (38, 44) des Raums gleitbeweglich und verdrehbar ist.

5. Turbomaschine bzw. Turbinentriebwerk, wie etwa Turbostrahltriebwerk oder Turbopropellertriebwerk für Flugzeuge, **dadurch gekennzeichnet, dass** sie bzw. es zumindest eine Vorrichtung nach einem der Ansprüche 1 bis 4 aufweist.

## Claims

1. A link device between an enclosure (24,28) configured to pass cooling air and a stator nozzle (10) and metal tubes (30) having ends mounted to slide in a leaktight manner in orifices in a casing (38,44) of the enclosure and in orifices in the stator nozzle (10), an end of each tube (30) being engaged in a ring (70) having a radially outer collar (72) that is slidable between two guide surfaces (74,76) that extend perpendicularly to an axis (46) of the orifices and that are carried by said nozzle (10), the guide surface (76) situated beside the casing (38,44) being held stationary relative to the nozzle (10), **characterized in that** the other guide surface (74) is movable axially relative to the nozzle (10) and is joined to a return means (88) configured to urge said other guide surface towards the casing (38,44).

2. The device according to claim 1, wherein the return means (88) is a coil spring or a Belleville spring washer.

3. The device according to claim 1 or 2, wherein the end (50) of the tube (30) mounted in the ring (70) includes a surface, including a shape of a segment of a sphere, that is mounted to pivot and slide in the ring.

4. The device according to anyone of claims 1 to 3, wherein said other end (50) of the tube (30) includes a surface, including a shape of a segment of a sphere, that is mounted to slide and pivot in an orifice in the casing (38,44) of the enclosure.

5. A turbomachine such as an airplane turbojet or turboprop, the turbomachine including at least one device according to anyone of claims 1 to 4.
